(19) Europäisches Patentamt European Patent Office Office européen des brevets

(11) **EP 3 391 521 B1**

(12) **FASCICULE DE BREVET EUROPEEN**

(45) Date de publication et mention de la délivrance du brevet:
**24.02.2021 Bulletin 2021/08**

(21) Numéro de dépôt: **16826095.8**

(22) Date de dépôt: **13.12.2016**

(51) Int Cl.:
***H02M 1/12*** *(2006.01)*

(86) Numéro de dépôt international:
**PCT/FR2016/053372**

(87) Numéro de publication internationale:
**WO 2017/103429 (22.06.2017 Gazette 2017/25)**

(54) **DISPOSITIF DE RECHARGE AMELIORE POUR LA RECHARGE D'UN EQUIPEMENT ELECTRIQUE, NOTAMMENT D'UN VEHICULE ELECTRIQUE**

VERBESSERTE AUFLADUNGSVORRICHTUNG ZUM AUFLADEN VON ELEKTRISCHER AUSRÜSTUNG, INSBESONDERE EINES ELEKTROFAHRZEUGS

IMPROVED RECHARGING DEVICE FOR RECHARGING ELECTRICAL EQUIPMENT, IN PARTICULAR AN ELECTRIC VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2015 FR 1562368**

(43) Date de publication de la demande:
**24.10.2018 Bulletin 2018/43**

(73) Titulaire: **Electricité de France**
**75008 Paris (FR)**

(72) Inventeurs:
• **RIOUAL, Michel**
**92340 Bourg La Reine (FR)**
• **BENOÎT, Alexandre**
**94290 Villeneuve Le Roi (FR)**

(74) Mandataire: **Plasseraud IP**
**66, rue de la Chaussée d'Antin**
**75440 Paris Cedex 09 (FR)**

(56) Documents cités:
**EP-A1- 1 069 673     US-A- 3 628 057**
**US-A- 6 127 743**

**Description**

La présente invention concerne les dispositifs de recharge destinés à recharger en énergie électrique des équipements électriques, en particulier des véhicules électriques.

Au cours des dernières années, le parc de véhicules automobiles assurant leur propulsion au moins partiellement à partir d'énergie électrique s'est considérablement étendu, et avec lui les infrastructures requises pour la fourniture de l'énergie électrique qui leur est nécessaire.

Typiquement, pour la recharge d'un véhicule électrique, on emploie un dispositif de recharge destiné à être raccordé à une source d'énergie électrique à partir de laquelle le dispositif de recharge fournit de l'énergie électrique dans un format adapté au véhicule électrique, par exemple plus spécifiquement à un dispositif de stockage d'énergie électrique embarqué à bord du véhicule.

Dans de nombreuses configurations de recharge, la source d'énergie électrique utilisée est un réseau d'alimentation via lequel de l'électricité produite à distance est acheminée jusqu'au dispositif de recharge.

Dans ce contexte, il a été constaté que sous certaines conditions notamment afférentes aux propriétés du réseau d'alimentation utilisé, les interactions entre le dispositif de recharge et le réseau d'alimentation étaient à l'origine de perturbations de la tension d'entrée fournie au dispositif de recharge. Il a notamment pu être déterminé que ces perturbations résultaient de l'atteinte d'un état de fonctionnement saturé de composants d'électronique de puissance du dispositif de recharge, et conséquemment d'un comportement non-linéaire du dispositif de recharge.

Or ces perturbations sont de nature à induire un arrêt de la charge de l'équipement électrique par le dispositif de recharge, voire à endommager le dispositif de recharge ou l'équipement électrique.

Une approche employée dans l'état de la technique pour résoudre ce problème consiste à ajouter un élément capacitif à l'interface entre le dispositif de recharge et le réseau. Le document US 6 127 743 A décrit un système d'atténuation dans une installation électrique. Toutefois, cette approche ne fournit pas des résultats satisfaisants et les perturbations demeurent un risque pour les équipements en jeu même pour des configurations dans lesquelles l'interface réseau-dispositif de recharge est dotée d'un tel élément capacitif. Aussi, l'invention vise à résoudre ce problème.

A cet effet, l'invention concerne un dispositif de recharge pour équipement électrique, comme divulgué dans la revendication 1.

Selon un aspect de l'invention, le module de rétroaction comprend, agencés en série entre la borne d'entrée de rétroaction et la borne de sortie de rétroaction, un retardateur, un premier amplificateur, un module configuré pour appliquer une fonction sinus à un signal d'entrée que ledit module reçoit et un deuxième amplificateur.

Selon un aspect de l'invention, le premier amplificateur est un amplificateur défini par une fonction de la forme y = a*x, où y est un signal de sortie du premier amplificateur, x est un signal d'entrée du premier amplificateur, et a est un gain du premier amplificateur.

Selon un aspect de l'invention, le deuxième amplificateur est défini par une fonction de la forme y = b*x, où y est un signal de sortie du deuxième amplificateur, x est un signal d'entrée du deuxième amplificateur, et b est un gain du deuxième amplificateur.

Selon un aspect de l'invention, le module de rétroaction est configuré pour délivrer une tension de rétroaction de la forme :

$$V_{sr}(t) = b * \sin(a * V_{sf}(t - \tau)),$$

où $V_{sr}(t)$ est la tension de rétroaction, b est un gain du deuxième amplificateur, a est un gain du premier amplificateur, $\tau$ est un retard du retardateur, et $V_{sf}(t)$ est la tension de sortie de filtrage.

Selon un aspect de l'invention, le retard du retardateur est compris entre 5 et 500 ms.

Selon un aspect de l'invention, le gain du premier amplificateur est compris entre 0,1 et 10.

Selon un aspect de l'invention, le gain du deuxième amplificateur est compris entre 10 et 5000.

Selon un aspect de l'invention, le module de rétroaction est configuré pour générer la tension de rétroaction de sorte que ladite tension de rétroaction soit en opposition par rapport à la tension d'entrée du dispositif de recharge.

Selon un aspect de l'invention, le dispositif comprend en outre un élément sommateur connecté à la borne d'entrée du dispositif de recharge, à la borne de sortie de rétroaction et à la borne d'entrée de filtrage, l'élément sommateur étant configuré pour fournir au module de filtrage une tension d'entrée de filtrage correspondant à la somme de la tension d'entrée et de la tension de rétroaction.

Selon un aspect de l'invention, le dispositif de recharge comprend un module de conversion adapté pour délivrer une puissance électrique régulée, le module de conversion comprenant au moins un commutateur commandable à l'ouverture et à la fermeture pour la fourniture de la puissance électrique régulée, et les perturbations de la tension d'entrée résultent au moins en partie d'une saturation dudit commutateur.

Selon un aspect de l'invention, les perturbations résultent d'une saturation dudit commutateur pour une valeur d'une inductance du réseau d'alimentation supérieure à une valeur seuil.

L'invention concerne également un procédé de recharge d'un équipement électrique, comme divulgué dans la revendication 12.

L'invention sera mieux comprise à la lecture de la description détaillée qui va suivre, donnée uniquement à titre d'exemples et faite en référence aux Figures annexées, sur lesquelles :

- La Figure 1 est une illustration schématique d'un dispositif de recharge selon l'invention ;
- La Figure 2 est un exemple de courbe de variation de la tension d'entrée du dispositif de recharge pour un réseau d'alimentation d'inductance valant 100 μH ;
- La Figure 3 est un exemple de courbe de variation de la tension d'entrée du dispositif de recharge pour un réseau d'alimentation d'inductance valant 750 μH ;
- La Figure 4 est une illustration d'un modèle d'un module de filtrage du dispositif de recharge de la Figure 1 ;
- La Figure 5 est une illustration de la topologie combinée d'un module redresseur et d'un module de conversion du dispositif de recharge de la Figure 1 ;
- La Figure 6 est une illustration d'un module de rétroaction du dispositif de recharge de la Figure 1 ;
- La Figure 7 est une illustration de la topologie combinée du module de rétroaction de la Figure 6 et du module de filtrage de la Figure 4 ;
- La Figure 8 est un diagramme-bloc illustrant un procédé de recharge selon l'invention ;
- La Figure 9 illustre des courbes de variations d'une tension d'entrée de filtrage du dispositif de recharge de la Figure 1 et d'une tension de rétroaction fournie par le module de rétroaction de la Figure 6.

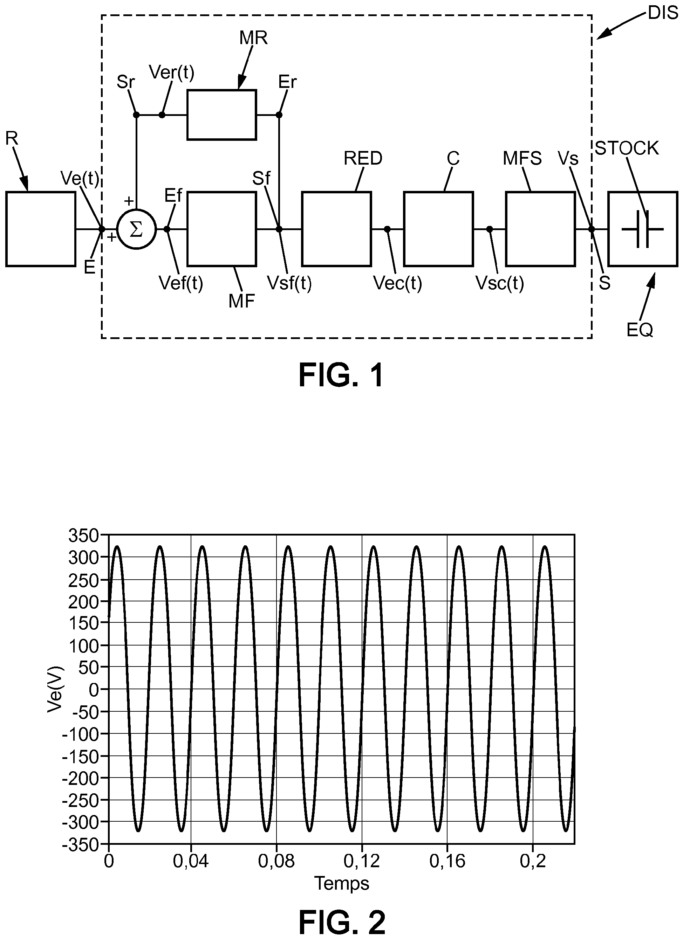

La Figure 1 illustre schématiquement un dispositif de recharge DIS selon l'invention, ci-après dispositif DIS.

Le dispositif est adapté pour réaliser la recharge en énergie électrique d'un équipement électrique EQ. Plus spécifiquement, il est prévu pour fournir de l'énergie électrique régulée à l'équipement EQ à partir d'une énergie électrique fournie par un réseau d'alimentation R, ci-après réseau R.

A cet effet, le dispositif DIS est configuré pour être connecté en entrée au réseau R, pour être connecté en sortie à l'équipement EQ, et pour délivrer à l'équipement EQ une tension de sortie Vs(t). En particulier, il est configuré pour délivrer à l'équipement EQ une tension de sortie Vs(t) continue.

L'équipement EQ comprend au moins un dispositif de stockage d'énergie électrique STOCK destiné à emmagasiner l'énergie électrique fournie par le dispositif DIS et à restituer cette énergie électrique.

Préférentiellement, l'équipement EQ est un véhicule électrique. Le véhicule électrique est prévu pour se propulser au moins partiellement à partir d'énergie électrique. A cet effet, le dispositif de stockage STOCK est configuré pour fournir de l'énergie électrique à un bloc de propulsion électrique (non représenté) du véhicule. Par exemple, le dispositif de stockage STOCK comprend un dispositif capacitif tel qu'une batterie.

Le réseau R est configuré pour fournir au dispositif DIS une tension d'entrée Ve(t). La tension d'entrée Ve(t) est alternative. Par exemple, la tension d'entrée Ve(t) oscille entre - 320 V et 320 V. En outre, elle présente par exemple une fréquence de l'ordre de 50 Hz.

Le réseau R présente une inductance. Cette inductance est par exemple comprise entre 100 μH et 800 μH. Optionnellement, cette inductance est agencée en série avec une résistance.

La valeur de cette inductance constitue un paramètre conditionnant l'apparition et le degré d'intensité des perturbations mentionnées précédemment. Les inventeurs ont pu constater qu'au-delà d'une valeur d'inductance donnée, la tension d'entrée fournie par le réseau R devenait graduellement plus susceptible de présenter ces perturbations.

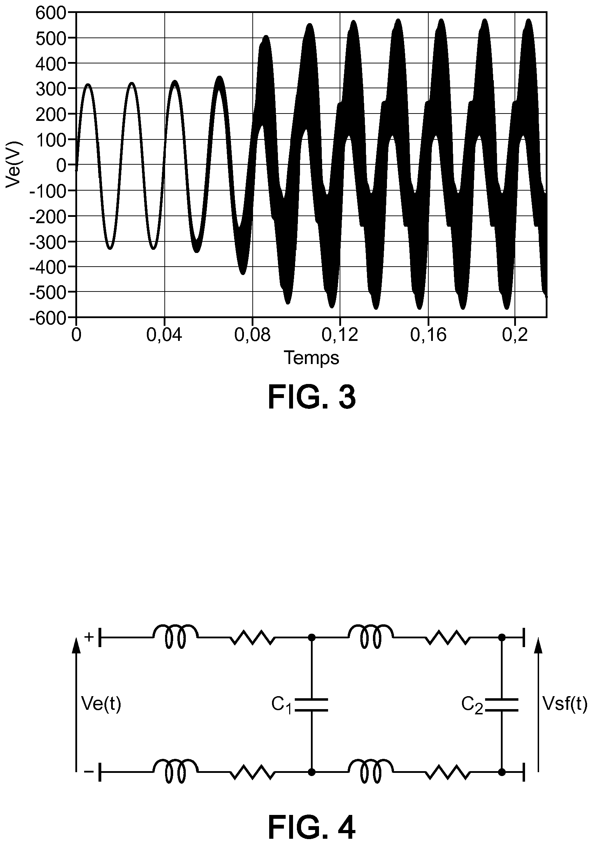

La Figure 2 illustre une courbe de variation de la tension d'entrée délivrée par le réseau R pour une inductance de 100 μH lorsqu'il est connecté en entrée à un dispositif de recharge de l'art antérieur. Quant à elle, la Figure 3 illustre cette courbe de variation pour un réseau ayant une inductance de 750 μH.

Sur la Figure 2, on constate que la tension d'entrée est sinusoïdale et régulière. Sur la Figure 3, on constate qu'après environ 75 ms, des perturbations de la tension d'entrée apparaissent. Ces perturbations se présentent sous la forme de distorsions importantes induisant notamment un écart important des tensions minimales et maximales relativement à ces tensions minimales et maximales dans la configuration de la Figure 2.

Ces perturbations résultent d'un comportement non-linéaire de composants d'électronique de puissance que comprennent de tels dispositifs. En effet, comme décrit ci-après pour le dispositif DIS, les dispositifs de recharge comprennent un convertisseur de puissance configuré pour fournir une puissance électrique régulée. La régulation de cette puissance est mise en œuvre par un ou plusieurs commutateurs, tels que des commutateurs connus sous l'acronyme anglophone IGBT pour « Insulated-gate bipolar transistor », qui signifie transistor bipolaire à grille isolée. Ces commutateurs sont commandés à l'ouverture et à la fermeture lors de cycles de découpage, de sorte que la puissance électrique de sortie corresponde à une puissance prescrite.

Il a ainsi été constaté que pour une valeur d'inductance relativement élevée du réseau R, les commutateurs de tels convertisseurs atteignent des points de fonctionnement correspondant à une saturation de ces commutateurs, ce qui aboutit à un comportement non-linéaire de leur part et de la part du dispositif de recharge de manière générale. Notamment, le courant qui traverse les commutateurs ou la tension à leurs bornes est généralement corrélé à la grandeur utilisée en entrée d'un dispositif de commande configuré pour faire commuter les commutateurs, de sorte que la commande des commutateurs elle-même est impactée par cet effet de saturation.

L'invention vise à la compensation de ces perturbations résultant du comportement non-linéaire des dispositifs de recharge destinés à être couplés à un réseau d'alimentation, en particulier lorsque l'inductance du réseau d'alimentation est supérieure à une valeur prédéterminée. Des microperturbations sont susceptibles d'apparaître dès que l'inductance du réseau d'alimentation est non nulle. Pour de très faibles valeurs de l'inductance, ces perturbations sont généralement acceptables. Toutefois, ces perturbations cessent rapidement d'être acceptables, en particulier lorsque cette inductance augmente.

On note que l'inductance du réseau R n'est pas le seul facteur responsable de l'apparition des perturbations. En effet, ce sont le comportement global et les propriétés de l'ensemble formé par le réseau, le dispositif DIS et l'équipement EQ qui déterminent si, à valeur d'inductance donnée, des perturbations sont susceptibles d'apparaître.

Il a toutefois été constaté que le rôle de l'inductance devenait prépondérant à ce titre au-delà d'une certaine valeur.

Ainsi, le dispositif de recharge selon l'invention est particulièrement adapté pour être couplé à des réseaux d'alimentation dont l'inductance est supérieure à 100 μH, et tout particulièrement adapté pour des réseaux dont l'inductance est supérieure à 350 μH. En effet, il a été constaté que les perturbations que l'on souhaite éliminer ont une probabilité d'occurrence forte au-delà de cette valeur d'inductance.

De nouveau en référence à la Figure 1, le dispositif DIS comprend une borne d'entrée E destinée à être connectée au réseau R, et à recevoir la tension d'entrée Ve(t) du réseau R via cette borne d'entrée E. Il comprend en outre une borne de sortie S destinée à être connectée à l'équipement EQ et via laquelle le dispositif DIS fournit la tension de sortie Vs(t) à l'équipement EQ.

Le dispositif DIS comprend en outre un module de filtrage MF, un module redresseur RED, un module de conversion C et un module de filtrage de sortie MFS. En outre, selon l'invention, le dispositif DIS comprend un module de rétroaction MR.

Le module de filtrage MF comprend une borne d'entrée de filtrage Ef connectée à la borne d'entrée E et comprend une borne de sortie de filtrage Sf.

Le module de filtrage MF est configuré pour fournir une tension de sortie de filtrage Vsf(t) via la borne de sortie de filtrage Sf par filtrage d'une tension d'entrée de filtrage Vef(t) fournie au module MF via la borne d'entrée de filtrage Ef.

Comme décrit après plus en détail, la borne d'entrée de filtrage Ef du module de filtrage MF est avantageusement connectée à la borne d'entrée E par l'intermédiaire d'un élément sommateur SOM configuré pour fournir au module de filtrage MF la tension d'entrée de filtrage Vef(t).

Comme décrit ci-après, l'élément sommateur est en particulier configuré pour que la tension d'entrée de filtrage corresponde à la somme de la tension d'entrée Ve(t) et d'une tension de rétroaction Vsr(t) fournie par le module de rétroaction et décrite ci-après.

Le module de filtrage MF est par exemple de facture connue.

Le module de filtrage comprend par exemple au moins un condensateur C1 formant un élément de filtrage passe-bas.

La Figure 4 illustre une modélisation schématique du module de filtrage MF. Avantageusement, dans le cadre de cette modélisation, le module de filtrage MF comprend deux cellules connectées l'une à l'autre. Les cellules comprennent respectivement un condensateur C1 formant tout ou partie d'un élément de protection contre la foudre, et un condensateur C2 formant un élément de filtrage passe-bas. Avantageusement, le condensateur C1 forme la capacité d'une diode de type Zener configurée pour filtrer les phénomènes électriques liés à la foudre susceptibles d'être transmis au dispositif DIS par le réseau R.

Par exemple, chaque cellule comprend respectivement trois branches dont une branche haute, une branche basse, et une branche verticale connectée aux branches haute et basse et sur laquelle le condensateur C1, C2 correspondant est agencé. Chaque branche haute et basse comprend par exemple une bobine et une résistance qui sont agencées en série. On remarque qu'une ou plusieurs des bobines de la seconde cellule a une valeur d'inductance légèrement supérieure à celles de la première cellule, car elle comprend en outre une self du module de conversion en amont de la non-linéarité à considérer.

La tension d'entrée Ve(t) correspond à la différence de potentiel entre les bornes d'entrée respectives des branches haute et basse de la première cellule, et la tension de sortie de filtrage Vsf(t) correspond à la différence de potentiel entre les bornes de sortie respectives des branches haute et basse de la deuxième cellule.

On note que la modélisation de la Figure 4 couvre une pluralité de topologies possibles pour le module de filtrage MF. Avantageusement, dans tout ou partie de ces topologies, le module de filtrage comprend deux cellules décrivant un dispositif de filtrage de mode commun ainsi que des capacités. Les capacités C1 et C2, qui correspondent au résultat de la modélisation des composants que comprend la topologie du module de filtrage, forment également des éléments de filtrage pour le mode différentiel. La topologie comprend avantageusement des éléments de filtrage de mode commun additionnels via lesquels les branches des cellules sont raccordées à une masse.

Le module redresseur RED est connecté en entrée à la borne de sortie de filtrage Sf, et est connecté en sortie au module de conversion C.

Le module redresseur RED est configuré pour transformer la tension de sortie de filtrage Vsf(t), qui est alternative, en tension d'entrée de conversion Vec(t), qui est continue.

Le module redresseur RED est par exemple de facture et de topologie connues.

Le module de conversion C est connecté en entrée à la sortie du module redresseur RED, et en sortie au module de filtrage de sortie MFS.

Le module de conversion C est configuré pour fournir en sortie une tension de sortie de conversion Vsc(t) à partir de la tension d'entrée de conversion Vec(t).

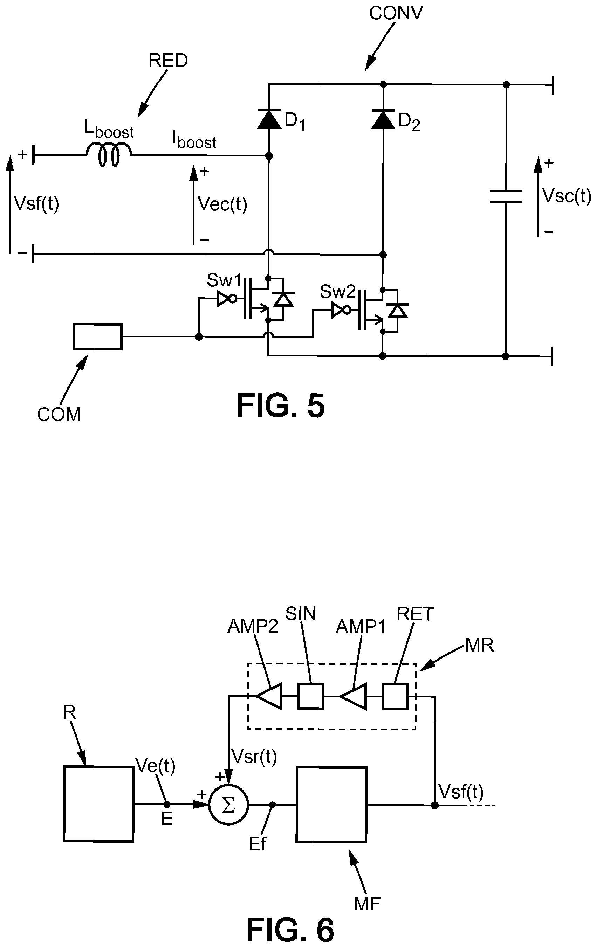

En référence à la Figure 5 qui illustre un exemple de topologie conjointe du module redresseur RED et du module de conversion C connectés l'un à l'autre, le module de conversion C comprend un convertisseur CONV et un module de commande COM configuré pour la commande du convertisseur CONV. Par exemple, en conditions nominales, la tension de sortie de conversion Vsc(t) vaut sensiblement 380 V.

Le convertisseur CONV est par exemple un convertisseur abaisseur/élévateur connu sous le nom anglophone de buck-boost.

Le convertisseur CONV comprend par exemple deux commutateurs Sw1 et Sw2 commandables à l'ouverture et à la fermeture. Les commutateurs Sw1, Sw2 sont par exemple des commutateurs IGBT. Ils sont par exemple agencés respectivement sur l'une et l'autre de deux branches basses du convertisseur. Le convertisseur comprend en outre deux branches hautes sur chacune desquelles est agencée une diode, et une branche de sortie sur laquelle est agencé un condensateur. La tension aux bornes du condensateur correspond à la tension de sortie de conversion Vsc(t).

Le module de commande COM est configuré pour commander les commutateurs Sw1 et Sw2 à l'ouverture et à la fermeture pour la régulation de la puissance électrique fournie en sortie du module de conversion C.

Par exemple, le principe de commande employé repose sur de la modulation à largeur d'impulsion, ou MLI. Le principe de commande est par exemple une régulation en tension, c'est-à-dire que la grandeur sur laquelle le principe de commande a vocation à agir est une tension. Alternativement, il s'agit d'une régulation en courant.

Par exemple, cette régulation est une régulation en courant par laquelle on régule la valeur du courant $i_{boost}$ traversant une bobine $L_{boost}$ agencée en entrée du convertisseur. En pratique, la valeur de ce courant est comparée à un courant de référence $i_{ref}$, par exemple déterminé à partir d'une consigne de tension à fournir en sortie du convertisseur CONV et de la tension d'entrée Ve(t), le résultat de cette comparaison fournissant un signal logique de niveau haut ou bas en fonction duquel le module de commande COM actionne les commutateurs. Par exemple, le niveau haut de ce signal est associé à un état donné des commutateurs (ouvert ou fermé), le niveau bas étant associé à un autre état donné de ceux-ci.

Alternativement, la régulation est une régulation en tension. Par exemple, on régule directement la valeur de la tension Vsc(t).

On note que le convertisseur abaisseur-élévateur de la Figure 5 est un exemple de convertisseur possible. De manière générale, le convertisseur CONV est un convertisseur quelconque comprenant au moins un interrupteur commandable à l'ouverture et à la fermeture pour la régulation de la puissance électrique fournie en sortie du convertisseur CONV.

Le module de filtrage de sortie MFS est configuré pour fournir la tension de sortie Vs(t) à partir de la tension de sortie de conversion Vsc(t) par filtrage de cette dernière.

A cet effet, le module de filtrage de sortie MFS est connecté en entrée à la sortie du module de conversion C qui fournit la tension de sortie de conversion Vsc(t), et a une borne de sortie correspondant à la borne de sortie S du dispositif D.

Le module de filtrage de sortie MFS est par exemple de facture connue.

Le module de rétroaction MR est couplé au module de filtrage MF. Le module de rétroaction MR est configuré pour générer une tension de rétroaction Vsr(t) à partir de la tension de sortie de filtrage Vsf(t) et pour fournir la tension de rétroaction Vsr(t) au module de filtrage MF pour la compensation des perturbations décrites ci-dessus.

Plus précisément, le module de rétroaction MR est configuré pour fournir la tension de rétroaction Vsr(t) au module de filtrage MF par l'intermédiaire de l'élément sommateur S.

Le module de rétroaction MR est configuré pour générer la tension de rétroaction Vsr(t) de sorte que ladite tension de rétroaction soit en opposition avec la tension d'entrée du dispositif de recharge.

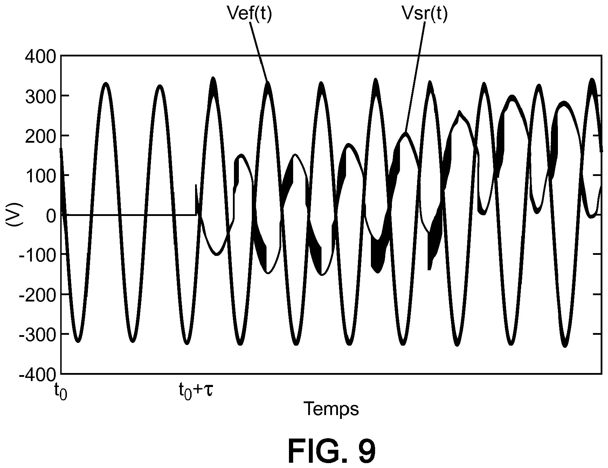

La notion d'opposition rejoint la notion d'opposition de phase même si, comme on le verra par la suite en référence à la Figure 9, la tension de rétroaction n'est pas sinusoïdale, de sorte qu'on ne peut véritablement parler d'opposition de phase. Aussi, on entend par « opposition » que, pour un instant auquel la tension d'entrée Ve(t) vaut un maximum local, la tension de rétroaction vaut un minimum local, et inversement pour un minimum local de la tension d'entrée et un maximum local de la tension de rétroaction. De la sorte, la somme de ces deux tensions présente des maxima locaux de valeur inférieur à celle des maxima locaux de la tension d'entrée, et des minima locaux de valeur supérieure à celle des minima locaux de la tension d'entrée.

Le module de rétroaction MR est agencé en parallèle du module de filtrage MF.

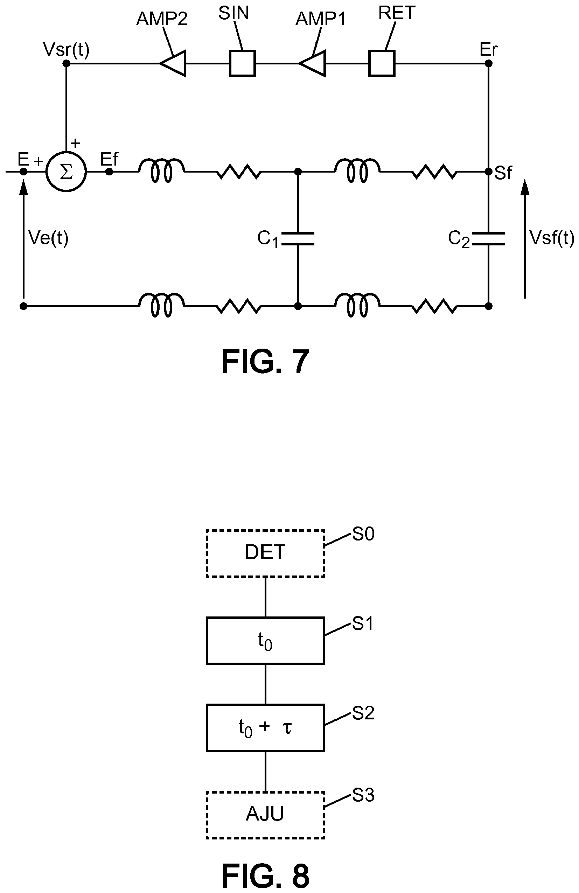

Plus spécifiquement, en référence à la Figure 6 et à la Figure 7, qui illustrent la connexion du module de rétroaction MR au module de filtrage MF de la Figure 4, le module de rétroaction comprend une borne d'entrée de rétroaction Er connectée à la borne de sortie de filtrage Sf du module de filtrage MF, et une borne de sortie de rétroaction Sr connectée à la borne d'entrée de filtrage Ef. La borne de sortie de rétroaction Sr est connectée à la borne d'entrée de filtrage Ef par l'intermédiaire de l'élément sommateur S.

Avantageusement, le module de rétroaction MR est configuré pour fournir une tension de rétroaction de la forme :

$$V_{sr}(t) = b * \sin(a * V_{sf}(t - \tau)).$$

A cet effet, le module de filtrage MF comprend un retardateur RET, un premier amplificateur AMP1, un module SIN configuré pour appliquer une fonction sinus à un signal d'entrée que ledit module reçoit, et un deuxième amplificateur AMP2. Ces éléments sont agencés en série entre la borne d'entrée de rétroaction Er et la borne de sortie de rétroaction Sr.

Le retardateur RET est configuré pour introduire un retard $\tau$ dans la tension de sortie de filtrage Vsf.

Autrement dit, le retardateur RET est configuré pour fournir en sortie le signal Vsf(t-$\tau$).

Le retard $\tau$ est avantageusement compris entre 5 et 500 ms.

Avantageusement, ce retard $\tau$ est compris entre 20 et 300 ms. Ces valeurs sont particulièrement adaptées pour une inductance du réseau R comprise entre 100 $\mu$H et 620 $\mu$H.

En outre, avantageusement, le retard $\tau$ est compris entre 30 et 200 ms lorsque l'inductance du réseau est supérieure à 620 $\mu$H.

Le premier amplificateur AMP1 présente une fonction de la forme y= a*x, où y est le signal de sortie du premier amplificateur AMP1, x est son signal d'entrée, et a est le gain du premier amplificateur. On note que le signal d'entrée du premier amplificateur est le signal de sortie du retardateur RET.

Avantageusement, a est compris entre 0,1 et 10.

Avantageusement, ce gain a est compris entre 0,2 et 4. Ces valeurs sont particulièrement adaptées pour une inductance du réseau R comprise entre 100 $\mu$H et 620 $\mu$H.

En outre, avantageusement, le gain a est compris entre 0,3 et 3 lorsque l'inductance du réseau est supérieure à 620 $\mu$H.

Le module SIN est configuré pour fournir un signal de sortie de la forme y= sin(x), où y est le signal de sortie du module SIN et x est son signal d'entrée. Le signal d'entrée x est la tension fournie en sortie par le premier amplificateur.

Le deuxième amplificateur AMP2 présente une fonction de la forme y = b*x, où y est le signal de sortie du deuxième amplificateur, x est le signal d'entrée du deuxième amplificateur, et b est un gain du deuxième amplificateur. On note que le signal d'entrée du deuxième amplificateur AMP2 est le signal de sortie du module SIN, et que son signal de sortie est la tension de rétroaction Vsr(t).

Avantageusement, b est compris entre 10 et 5000.

Avantageusement, ce gain b est compris entre 30 et 3000. Ces valeurs sont particulièrement adaptées pour une inductance du réseau R comprise entre 100 $\mu$H et 620 $\mu$H.

En outre, avantageusement, le gain b est compris entre 60 et 1500 lorsque l'inductance du réseau est supérieure à 620 $\mu$H.

En d'autres termes, le module de rétroaction MR est configuré pour fournir une tension de rétroaction de la forme :

$$V_{sr}(t) = b * \sin(a * V_{sf}(t - \tau)).$$

On remarque que les amplificateurs, le retardateur et le module SIN correspondent à des opérateurs réalisant respectivement des fonctions d'amplification, de retard, etc. L'expression « en série » signifie que ces opérateurs sont agencés consécutivement les uns aux autres de façon à former une chaîne d'opérations de la tension de sortie de filtrage aboutissant à la tension de rétroaction.

On connaît par exemple les opérateurs logiques du type OR, AND, NOR, etc, qui peuvent par exemple être implémentés sous forme de composants discrets ou bien au sein d'une carte électronique, par exemple de type circuit intégré. De même, les opérateurs du module de rétroaction peuvent être mis en œuvre sous une forme quelconque.

Par exemple, les opérateurs du module de rétroaction peuvent être mis en œuvre sous la forme de composants discrets. Par exemple, les amplificateurs comprennent ou sont formés par des amplificateurs opérationnels, et le retardateur comprend ou est formé par un relais à temporisation. Le module SIN est par exemple également réalisé à partir de composants discrets

Alternativement, ces opérateurs peuvent être mis en œuvre sous une autre forme, telle que par exemple celle d'un circuit intégré, par exemple de type microcontrôleur.

Dans certaines réalisations, ces mises en œuvre peuvent être combinées, le module de rétroaction comprenant un circuit intégré pour la mise en œuvre d'une partie de ces opérations, et au moins un composant discret pour la mise en œuvre d'au moins une opération du module MR.

Un procédé de recharge de l'équipement électrique EQ au moyen du dispositif DIS va maintenant être décrit en référence aux Figures pour une configuration dans laquelle la tension d'entrée Ve(t) présente des perturbations telles que celles décrites en référence à la Figure 3.

Initialement, lors d'une première étape de recharge S1 débutant à un instant $t_0$, le réseau R fournit au dispositif DIS la tension d'entrée Ve(t), cette tension étant nulle pour les instants précédant $t_0$. La tension de rétroaction est nulle du fait de la présence du retardateur RET. De ce fait, la tension effectivement fournie par l'élément sommateur au module de filtrage MF est la tension Ve(t).

Le module de filtrage MF fournit alors la tension de sortie de filtrage Vsf(t) par filtrage de la tension d'entrée de filtrage Vef(t).

La tension de sortie de filtrage Vsf(t) est fournie au module redresseur RED, qui transforme la tension de sortie de filtrage Vsf(t) qui est alternative en la tension d'entrée de conversion Vec(t), qui est continue.

Le module de conversion CONV régule alors la puissance électrique fournie en sortie à partir de la tension d'entrée de conversion, et délivre la tension de sortie de conversion Vsc(t). Cette tension Vsc(t) est ensuite filtrée par le module de filtrage de sortie MFS, qui délivre en sortie la tension de sortie Vs(t) fournie à l'équipement électrique. A partir de cette tension Vs(t), le dispositif de stockage STOCK de l'équipement électrique emmagasine de l'énergie électrique apte à être restituée par lui ultérieurement, par exemple pour la propulsion de l'équipement EQ lorsqu'il s'agit d'un véhicule électrique.

Lors d'une deuxième étape de recharge S2 qui débute à l'instant $t_0+\tau$, la tension de rétroaction Vsr(t) cesse d'être nulle.

Plus spécifiquement, à partir de $t_0+\tau$, $t-\tau$ devient supérieur à $t_0$, de sorte que le retardateur RET délivre en sortie une tension non nulle. Cette tension est successivement transformée par le premier amplificateur AMP1, le module SIN et le deuxième amplificateur AMP2, de sorte que la tension de rétroaction soit non nulle et de la forme $V_{sr}(t) = b * \sin(a * V_{sf}(t - \tau))$.

Cette tension de rétroaction Vsr(t) non nulle est fournie à l'élément sommateur SOM, qui délivre en sortie la tension d'entrée de filtrage Vef(t) correspondant à la somme de la tension d'entrée Ve(t) fournie par le réseau R et de la tension de rétroaction Vsr(t). C'est cette somme qui est alors fournie au module de filtrage MF, et qui après transformations successives par le module de filtrage MF, le module redresseur RED, le module de conversion C et le module de filtrage de sortie MFS, fournit la tension de sortie Vs(t) fournie à l'équipement EQ.

On note que les valeurs des paramètres a, b et $\tau$ sont déterminées préalablement pour une configuration donnée de l'ensemble formé par le réseau et le dispositif de recharge. Autrement dit, lors des étapes S1 et S2, les valeurs de ces paramètres ne sont pas modifiées.

Optionnellement, lors d'une étape S3, menée par exemple à intervalle de temps prédéterminé, on modifie la valeur de ces paramètres pour tenir compte d'évolutions du comportement du réseau et/ou du dispositif de recharge, et résultant par exemple d'un vieillissement de l'élément considéré.

La Figure 9 illustre d'une part les variations de la tension d'entrée de filtrage Vef(t), c'est-à-dire de la somme de la tension d'entrée Ve(t) et celle de la tension de rétroaction Vsr(t), et d'autre part les variations de la seule tension de rétroaction Vsr(t), et ce pour un réseau R d'impédance valant sensiblement 600 $\mu$H.

La tension de rétroaction est nulle jusqu'à l'instant $t_0+\tau$. et devient non nulle à partir de $t_0+\tau$.

On constate sur cette courbe que les perturbations de la tension d'entrée Ve(t) visibles sur la Figure 3 ne sont pas répercutées dans la tension d'entrée de filtrage Vef(t) du fait de la tension de rétroaction Vsr(t).

En particulier, on constate que le mécanisme d'opposition de la tension de rétroaction Vsr(t) a pour effet de faire diminuer les valeurs des extrema des perturbations de la tension d'entrée, qui correspondent à un mécanisme basse fréquence de ces perturbations. En outre, la composante haute fréquence des perturbations, à l'origine du phénomène d'épaississement du contour de la courbe de la Figure 3, est également compensée par une composante de haute fréquence de la tension de rétroaction, visualisable en Figure 9 sous la forme d'impulsions à haute fréquence relativement à la fréquence de la tension d'entrée de filtrage.

L'invention présente de nombreux avantages.

En effet, elle permet la résolution du problème des perturbations affectant les échanges d'énergie électrique entre un réseau d'alimentation et un dispositif de recharge d'équipement électrique, résultant d'un comportement non-linéaire de l'électronique de puissance des dispositifs de recharge qui survient notamment pour des réseaux d'alimentation de haute inductance.

Les perturbations en question sont de nature à substantiellement endommager les équipements en jeu, notamment du fait des divergences importantes entre les tensions qu'il est souhaitable d'obtenir et celles qui sont effectivement obtenues en leur présence.

Dans le cas de réseaux d'impédance élevée, des surtensions d'amplitude importante peuvent apparaître. Cette situation conduit au déclenchement de dispositifs de protection que comprennent certains dispositifs de recharge et destinés à protéger le matériel, entraînant l'arrêt de la charge de la batterie sans que l'utilisateur ne dispose d'un diagnostic expliquant l'origine de cette coupure. Le dispositif selon l'invention permet de s'affranchir de ce type d'instabilités, et par conséquent de poursuivre la charge de la batterie sans interruptions.

Par ailleurs, le principe d'atténuation de ces perturbations par l'emploi d'une philosophie de rétroaction au niveau du filtre d'entrée s'avère présenter de biens meilleurs résultats qu'une approche reposant sur l'emploi d'un élément capacitif à l'interface entre le dispositif et le réseau.

En outre, la solution proposée est en elle-même peu complexe, puisqu'elle repose sur l'emploi d'une boucle de rétroaction dont la configuration est prédéterminée et ne requiert aucun dispositif de commande actif, tel qu'un dispositif de commande à commutateur.

En conséquence, l'invention peut aisément faire l'objet d'une implémentation sur des dispositifs de recharge existants, et ce de manière peu coûteuse.

Le principe de l'invention est particulièrement avantageux dans le cas où le module de filtrage comprend un mécanisme de protection contre la foudre de type diode Zener, et, en sus, un deuxième condensateur pour le filtrage de phénomènes de haute fréquence, tel que par exemple des harmoniques. Ces harmoniques sont par exemple générées par l'électronique de puissance du module de conversion C.

En effet, dans ce cas de figure, la présence du premier condensateur de la protection anti-foudre confère aux perturbations une configuration que l'invention parvient à compenser de manière particulièrement adaptée. Toutefois, l'invention présente également de bons résultats lorsque le module de filtrage ne comprend pas de protection anti-foudre.

Il est à noter que la solution proposée par l'invention à ce problème de perturbations est une solution à considérer comme une solution globale au problème du comportement non-linéaire du dispositif de recharge. Autrement dit, la valeur d'un paramètre donné du module de rétroaction, tel que le gain a ou le retard $\tau$, ne peut être perçu comme ayant une valeur fournissant une solution à un sous-problème du problème global des perturbations.

Aussi, optionnellement, dans le cadre du procédé de recharge de la Figure 8, le procédé comprend un étape préalable S0 au cours de laquelle on détermine la valeur des paramètres a, b et $\tau$.

Pour ce faire, on modélise initialement l'ensemble formé par le réseau R, le dispositif DIS et le dispositif de stockage STOCK de l'équipement E sous la forme d'un système simplifié au sein duquel la non-linéarité du dispositif de recharge est modélisée, l'ensemble constituant un oscillateur non-linéaire.

Ensuite, on détermine les valeurs de paramètres a, b et $\tau$ en tant que solutions du problème de stabilité du modèle obtenu au sens de Lyapunov, qui se traduit par des conditions de convergence des trajectoires de grandeurs, aussi appelées variables d'état, du système modélisé dans l'espace des phases, ce qui fournit des conditions sur les valeurs des paramètres a, b et $\tau$.

On note que ce procédé de détermination fournit une solution ayant pour caractéristique d'être en opposition de la tension d'entrée (au sens de la définition donnée ci-dessus).

L'étape optionnelle S3 est par exemple menée de manière identique.

La description ci-dessus a été donnée dans le cadre d'un dispositif DIS adapté pour effectuer une recharge de l'équipement EQ de manière monophasée, c'est-à-dire par l'intermédiaire d'un seul conducteur de phase via lequel une phase unique, classiquement notée L1, est fournie à l'équipement.

Toutefois, en variante, le dispositif DIS est adapté pour la réalisation d'une recharge de l'équipement EQ de manière triphasée.

Dans cette variante non représentée, le dispositif DIS comprend, pour chaque phase qu'il est adapté pour fournir à l'équipement EQ, la chaine d'équipements décrite ci-dessus.

Autrement dit, pour chaque phase, le dispositif DIS comprend un module de filtrage d'entrée, un module redresseur, un module de conversion, un module de filtrage de sortie et un module de rétroaction couplé au module de filtrage pour la fourniture d'une tension de rétroaction compensant les perturbations de la tension d'entrée fournie par le réseau au dispositif DIS pour la phase correspondante.

D'autres réalisations sont en outre envisageables.

## Revendications

1. Dispositif de recharge pour équipement électrique (EQ), notamment pour véhicule électrique, le dispositif de recharge (DIS) étant destiné à être raccordé à un réseau d'alimentation (R) délivrant au moins une tension d'entrée (Ve(t)) alternative au dispositif de recharge, le dispositif de recharge étant configuré pour fournir à l'équipement électrique au moins une tension de sortie (Vs(t)) continue, le dispositif de recharge comprenant :

   - une borne d'entrée (E) destinée à être raccordée au réseau d'alimentation (R);
   - une borne de sortie (S) destinée à être raccordée à l'équipement électrique (EQ);
   - un module de filtrage (MF) comprenant une borne d'entrée de filtrage (Ef) raccordée à la borne d'entrée (E) du dispositif de recharge, et une borne de sortie de filtrage (Sf), le module de filtrage (MF) étant configuré pour fournir une tension de sortie de filtrage (Vsf(t)) via la borne de sortie de filtrage (Sf),

   **caractérisé en ce que** le dispositif de recharge comprend en outre un module de rétroaction (MR) couplé au module de filtrage (MF) et comprenant une borne d'entrée de rétroaction (Er) connectée à la borne de sortie de filtrage (Sf) et une borne de sortie de rétroaction (Sr) connectée à la borne d'entrée de filtrage (Ef), le module de rétroaction étant configuré pour générer une tension de rétroaction (Vsr(t)) à partir de la tension de sortie de filtrage (Vsf(t)) et pour délivrer la tension de rétroaction via la borne de sortie de rétroaction (Sr) pour la compensation de perturbations de la tension d'entrée (Ve(t)) résultant d'un comportement non-linéaire du dispositif de recharge (DIS), de sorte que ladite tension de rétroaction (Vsr(t)) soit en opposition avec la tension d'entrée (Ve(t)) du dispositif de recharge, opposition signifiant que pour un instant auquel la tension d'entrée Ve(t) vaut un maximum local, la tension de rétroaction vaut un minimum local, et inversement pour un minimum local de la tension d'entrée et un maximum local de la tension de rétroaction.

**2.** Dispositif de recharge selon la revendication 1, dans lequel le module de rétroaction (MR) comprend, agencés en série entre la borne d'entrée de rétroaction (Er) et la borne de sortie de rétroaction (Sr), un retardateur (RET), un premier amplificateur (AMP1), un module (SIN) configuré pour appliquer une fonction sinus à un signal d'entrée que ledit module reçoit et un deuxième amplificateur (AMP2).

**3.** Dispositif de recharge selon la revendication 2, dans lequel le premier amplificateur (AMP1) est défini par une fonction de la forme y = a*x, où y est un signal de sortie du premier amplificateur, x est un signal d'entrée du premier amplificateur, et a est un gain du premier amplificateur.

**4.** Dispositif de recharge selon la revendication 2 ou 3, dans lequel le deuxième amplificateur (AMP2) est défini par une fonction de la forme y = b* x, où y est un signal de sortie du deuxième amplificateur, x est un signal d'entrée du deuxième amplificateur, et b est un gain du deuxième amplificateur.

**5.** Dispositif de recharge selon l'une quelconque des revendications 2 à 4, dans lequel le module de rétroaction (MR) est configuré pour délivrer une tension de rétroaction (Vsr(t)) de la forme :

$$V_{sr}(t) = b * \sin\left(a * V_{sf}(t - \tau)\right),$$

où $V_{sr}(t)$ est la tension de rétroaction, b est un gain du deuxième amplificateur, a est un gain du premier amplificateur, $\tau$ est un retard du retardateur, et $V_{sf}(t)$ est la tension de sortie de filtrage.

**6.** Dispositif de recharge selon la revendication 5, dans lequel le retard ($\tau$) du retardateur est compris entre 5 et 500 ms.

**7.** Dispositif de recharge selon la revendication 3, 5 ou 6, dans lequel le gain du premier amplificateur est compris entre 0,1 et 10.

**8.** Dispositif de recharge selon l'une quelconque des revendications 4 à 6, dans lequel le gain du deuxième amplificateur est compris entre 10 et 5000.

**9.** Dispositif de recharge selon l'une quelconque des revendications précédentes, dans lequel le dispositif comprend en outre un élément sommateur (SOM) connecté à la borne d'entrée (E) du dispositif de recharge (DIS), à la borne de sortie de rétroaction (Sr) et à la borne d'entrée de filtrage (Ef), l'élément sommateur (SOM) étant configuré pour fournir au module de filtrage une tension d'entrée de filtrage (Vef(t)) correspondant à la somme de la tension d'entrée (Ve(t)) et de la tension de rétroaction (Vsr(t)).

**10.** Dispositif de recharge selon l'une quelconque des revendications précédentes, **caractérisé en ce que** le dispositif de recharge (DIS) comprend un module de conversion (C) adapté pour délivrer une puissance électrique régulée, le module de conversion comprenant au moins un commutateur (Sw1, Sw2) commandable à l'ouverture et à la fermeture pour la fourniture de la puissance électrique régulée, et dans lequel les perturbations de la tension d'entrée (Ve(t)) résultent au moins en partie d'une saturation dudit commutateur.

**11.** Dispositif de recharge selon la revendication 10, dans lequel les perturbations résultent d'une saturation dudit commutateur pour une valeur d'une inductance du réseau d'alimentation (R) supérieure à une valeur seuil.

**12.** Procédé de recharge d'un équipement électrique, notamment d'un véhicule électrique, mis en œuvre par l'intermédiaire d'un dispositif de recharge (DIS) raccordé à un réseau d'alimentation (R) délivrant au dispositif de recharge au moins une tension d'entrée (Ve(t)) alternative, le dispositif de recharge fournissant à l'équipement électrique au moins une tension de sortie (Vs(t)) continue, le dispositif de recharge comprenant :

- une borne d'entrée (E) raccordée au réseau d'alimentation (R);
- une borne de sortie (S) raccordée à l'équipement électrique (EQ);
- un module de filtrage (MF) comprenant une borne d'entrée de filtrage (Ef) raccordée à la borne d'entrée du dispositif de recharge (DIS), et une borne de sortie de filtrage (Sf), le module de filtrage (MF) fournissant une tension de sortie de filtrage (Vsf(t)) via la borne de sortie de filtrage (Sf),

le procédé comprenant une étape de recharge au cours de laquelle on réalise la recharge en énergie électrique de l'équipement électrique (EQ) à partir de la tension de sortie (Vs(t)) fournie par le dispositif de recharge,
**caractérisé en ce que** lors de l'étape de recharge, on génère une tension de rétroaction (Vsr(t)) à partir de la tension de sortie de filtrage (Vsf(t)) et on délivre la tension de rétroaction (Vsr(t)) via une borne de sortie de rétroaction (Sr) connectée à la borne d'entrée de filtrage (Ef) pour la compensation de perturbations de la tension d'entrée résultant d'un comportement non-linéaire du dispositif de recharge, de sorte que ladite tension de rétroaction (Vsr(t)) soit en opposition avec la tension d'entrée (Ve(t)) du dispositif de recharge, opposition signifiant que pour un instant auquel la tension d'entrée Ve(t) vaut un maximum local, la tension de rétroaction vaut un minimum local, et inversement pour un minimum local de la tension d'entrée et un maximum local de la tension de rétroaction.

**Patentansprüche**

1. Ladevorrichtung für elektrische Ausrüstung (EQ), insbesondere für Elektrofahrzeuge, wobei die Ladevorrichtung (DIS) dafür ausgelegt ist, mit einem Versorgungsnetz (R) verbunden zu werden, das der Ladevorrichtung wenigstens eine Eingangswechselspannung (Ve(t)) liefert, wobei die Ladevorrichtung dazu ausgebildet ist, der elektrischen Ausrüstung wenigstens eine Ausgangsgleichspannung (Vs(t)) zuzuführen, wobei die Ladevorrichtung Folgendes umfasst:

   - einen Eingangsanschluss (E) zur Verbindung mit dem Versorgungsnetz (R);
   - einen Ausgangsanschluss (S) zur Verbindung mit der elektrischen Ausrüstung (EQ);
   - ein Filtermodul (MF) mit einem Filtereingangsanschluss (Ef), der mit dem Eingangsanschluss (E) der Ladevorrichtung verbunden ist, und einem Filterausgangsanschluss (Sf), wobei das Filtermodul (MF) dazu ausgebildet ist, eine Filterausgangsspannung (Vsf(t)) über den Filterausgangsanschluss (Sf) zuzuführen,

   **dadurch gekennzeichnet, dass** die Ladevorrichtung ferner ein Rückkopplungsmodul (MR) umfasst, das mit dem Filtermodul (MF) gekoppelt ist und einen Rückkopplungseingangsanschluss (Er) aufweist, der mit dem Filterausgangsanschluss (Sf) verbunden ist, und einen Rückkopplungsausgangsanschluss (Sr), der mit dem Filtereingangsanschluss (Ef) verbunden ist, wobei das Rückkopplungsmodul dazu ausgebildet ist, eine Rückkopplungsspannung (Vsr(t)) aus der Filterausgangsspannung (Vsf(t)) zu erzeugen und die Rückkopplungsspannung über den Rückkopplungsausgangsanschluss (Sr) zu liefern, um Störungen der Eingangsspannung (Ve(t)) infolge eines nichtlinearen Verhaltens der Ladevorrichtung (DIS) auszugleichen, sodass die genannte Rückkopplungsspannung (Vsr(t)) der Eingangsspannung (Ve(t)) der Ladevorrichtung entgegengesetzt ist, wobei "entgegengesetzt" hier bedeutet, dass für einen Moment, in dem die Eingangsspannung (Ve(t)) gleich einem lokalen Maximum ist, die Rückkopplungsspannung gleich einem lokalen Minimum ist, und umgekehrt bei einem lokalen Minimum der Eingangsspannung und einem lokalen Maximum der Rückkopplungsspannung.

2. Ladevorrichtung nach Anspruch 1, wobei das Rückkopplungsmodul (MR) in Reihenschaltung zwischen dem Rückkopplungseingangsanschluss (Er) und dem Rückkopplungsausgangsanschluss (Sr) einen Retarder (RET), einen ersten Verstärker (AMP1), ein Modul (SIN), das dazu ausgebildet ist, eine Sinusfunktion an ein Eingangssignal anzulegen, welches das genannte Modul empfängt, und einen zweiten Verstärker (AMP2) umfasst.

3. Ladevorrichtung nach Anspruch 2, wobei der erste Verstärker (AMP1) durch eine Funktion der Form y = a*x definiert ist, wo y ein Ausgangssignal des ersten Verstärkers ist, x ein Eingangssignal des ersten Verstärkers ist und a eine Verstärkung des ersten Verstärkers ist.

4. Ladevorrichtung nach Anspruch 2 oder 3, wobei der zweite Verstärker (AMP2) durch eine Funktion der Form y = b*x definiert ist, wo y ein Ausgangssignal des zweiten Verstärkers ist, x ein Eingangssignal des zweiten Verstärkers ist und b eine Verstärkung des zweiten Verstärkers ist.

5. Ladevorrichtung nach einem der Ansprüche 2 bis 4, wobei das Rückkopplungsmodul (MR) dazu ausgebildet ist, eine Rückkopplungsspannung (Vsr(t)) der folgenden Form zu liefern:

$$V_{sr}(t) = b * \sin (a * V_{sf}(t - \tau)),$$

   wo $V_{sr}(t)$ die Rückkopplungsspannung ist, b eine Verstärkung des zweiten Verstärkers ist, a eine Verstärkung des ersten Verstärkers ist, $\tau$ eine Verzögerung des Retarders ist und $V_{sf}(t)$ die Filterausgangsspannung ist.

6. Ladevorrichtung nach Anspruch 5, wobei die Verzögerung ($\tau$) des Retarders im Bereich zwischen 5 und 500 ms liegt.

7. Ladevorrichtung nach Anspruch 3, 5 oder 6, wobei die Verstärkung des ersten Verstärkers im Bereich zwischen 0,1 und 10 liegt.

8. Ladevorrichtung nach einem der Ansprüche 4 bis 6, wobei die Verstärkung des zweiten Verstärkers im Bereich zwischen 10 und 5000 liegt.

9. Ladevorrichtung nach einem der vorhergehenden Ansprüche, wobei die Vorrichtung ferner ein Summierglied (SOM) umfasst, das mit dem Eingangsanschluss (E) der Ladevorrichtung (DIS), mit dem Rückkopplungsausgangsanschluss (Sr) und mit dem Filtereingangsanschluss (Ef) verbunden ist, wobei das Summierglied (SOM) dazu ausgebildet ist, dem Filtermodul eine Filtereingangsspannung (Vef(t)) zuzuführen, die der Summe der Eingangsspannung (Ve(t)) und der Rückkopplungsspannung (Vsr(t)) entspricht.

**10.** Ladevorrichtung nach einem der vorhergehenden Ansprüche, **dadurch gekennzeichnet, dass** die Ladevorrichtung (DIS) ein Umwandlungsmodul (C) umfasst, das geeignet ist, eine geregelte elektrische Leistung zu liefern, wobei das Umwandlungsmodul mindestens einen Kommutator (Sw1, Sw2) umfasst, der beim Öffnen und Schließen dahingehend steuerbar ist, dass er die geregelte elektrische Leistung liefert, und wobei die Störungen der Eingangsspannung (Ve(t)) zumindest teilweise aus einer Sättigung des genannten Kommutators resultieren.

**11.** Ladevorrichtung nach Anspruch 10, wobei die Störungen aus einer Sättigung des genannten Kommutators bei einem Wert einer Induktivität des Versorgungsnetzes (R) oberhalb eines Schwellenwerts resultieren.

**12.** Verfahren zum Aufladen einer elektrischen Ausrüstung, insbesondere eines Elektrofahrzeugs, das mit Hilfe einer Ladevorrichtung (DIS) ausgeführt wird, die mit einem Versorgungsnetz (R) verbunden ist, das der Ladevorrichtung wenigstens eine Eingangswechselspannung (Ve(t)) liefert, wobei die Ladevorrichtung der elektrischen Ausrüstung wenigstens eine Ausgangsgleichspannung (Vs(t)) zuführt, wobei die Ladevorrichtung Folgendes umfasst:

- einen Eingangsanschluss (E), der mit dem Versorgungsnetz (R) verbunden ist;
- einen Ausgangsanschluss (S), der mit der elektrischen Ausrüstung (EQ) verbunden ist;
- ein Filtermodul (MF) mit einem Filtereingangsanschluss (Ef), der mit dem Eingangsanschluss der Ladevorrichtung (DIS) verbunden ist, und einem Filterausgangsanschluss (Sf), wobei das Filtermodul (MF) über den Filterausgangsanschluss (Sf) eine Filterausgangsspannung (Vsf(t)) liefert, wobei das Verfahren einen Aufladeschritt umfasst, bei dem das Wiederaufladen der elektrischen Ausrüstung (EQ) mit elektrischer Energie aus einer Ausgangsspannung (Vs(t)) erfolgt, die von der Ladevorrichtung geliefert wird,

**dadurch gekennzeichnet, dass** während des Aufladeschrittes eine Rückkopplungsspannung (Vsr(t)) aus der Filterausgangsspannung (Vsf(t)) erzeugt wird und die Rückkopplungsspannung (Vsr(t)) über einen Rückkopplungsausgangsanschluss (Sr) geliefert wird, der mit dem Filtereingangsanschluss (Ef) verbunden ist, um Störungen der Eingangsspannung infolge eines nichtlinearen Verhaltens der Ladevorrichtung zu kompensieren, sodass die genannte Rückkopplungsspannung (Vsr(t)) der Eingangsspannung (Ve(t)) der Ladevorrichtung entgegengesetzt ist, wobei "entgegengesetzt" bedeutet, dass für einen Moment, indem die Eingangsspannung (Ve(t)) gleich einem lokalen Maximum ist, die Rückkopplungsspannung gleich einem lokalen Minimum ist, und umgekehrt bei einem lokalen Minimum der Eingangsspannung und einem lokalen Maximum der Rückkopplungsspannung.

## Claims

**1.** Recharging device for electrical equipment (EQ), in particular for an electric vehicle, the recharging device (DIS) being intended to be connected to a supply network (R) delivering at least one alternating input voltage (Ve(t)) to the recharging device, the recharging device being configured to supply the electrical equipment with at least one continuous output voltage (Vs(t)), the recharging device comprising:

- an input terminal (E) intended to be connected to the supply network (R);
- an output terminal (S) intended to be connected to the electrical equipment (EQ);
- a filter module (MF) comprising a filter input terminal (Ef) connected to the input terminal (E) of the recharging device, and a filter output terminal (Sf), the filter module (MF) being configured to provide a filter output voltage (Vsf(t)) via the filter output terminal (Sf),

**characterized in that** the recharging device further comprises a feedback module (MR) coupled to the filter module (MF) and comprising a feedback input terminal (Er) connected to the filter output terminal (Sf) and a feedback output terminal (Sr) connected to the filter input terminal (Ef), the feedback module being configured to generate a feedback voltage (Vsr(t)) from the filter output voltage (Vsf(t)) and for outputting the feedback voltage via the feedback output terminal (Sr) in order to compensate for disturbances in the input voltage (Ve(t)) resulting from a non-linear behavior of the recharging device (DIS), said feedback voltage (Vsr(t)) being in opposition with the input voltage (Ve(t)) of the recharging device, opposition meaning that, at an instant when the input voltage Ve(t) is at a local maximum, the feedback voltage is at a local minimum, and vice versa with a local minimum of the input voltage and a local maximum of the feedback voltage.

**2.** Recharging device according to claim 1, wherein the feedback module (MR) comprises, arranged in series between the feedback input terminal (Er) and the feedback output terminal (Sr), a timer (RET), a first amplifier (AMP1), a module (SIN) configured to apply a sine function to an input signal delivered to said module, and a second amplifier (AMP2).

3. Recharging device according to claim 2, wherein the first amplifier (AMP1) is defined by a function of the y = a*x type, wherein y is a first amplifier output signal, x is a first amplifier input signal, and a is a first amplifier gain.

4. Recharging device according to claim 2 or 3, wherein the second amplifier (AMP2) is defined by a function of the y = b*x type, where y is a second amplifier output signal, x is a second amplifier input signal, and b is a second amplifier gain.

5. Recharging device according to any one of claims 2 to 4, wherein the feedback module (MR) is configured to deliver a feedback voltage (Vsr(t)) of the following type:

$$V_{sr}(t) = b * \sin(a * V_{sf}(t - \tau)),$$

wherein $V_{sr}(t)$ is the feedback voltage, b is a second amplifier gain, a is a first amplifier gain, $\tau$ is a delay set by the timer, and $V_{sf}(t)$ is the filter output voltage.

6. Recharging device according to claim 5, wherein the timer delay ($\tau$) is comprised between 5 and 500 ms.

7. Recharging device according to claim 3, 5 or 6, wherein the first amplifier gain is comprised between 0.1 and 10.

8. Recharging device according to any one of claims 4 to 6, wherein the second amplifier gain is comprised between 10 and 5000.

9. Recharging device according to any of the preceding claims, wherein the device further comprises a summing element (SOM) connected to the input terminal (E) of the recharging device (DIS), to the feedback output terminal (Sr) and to the filter input terminal (Ef), the summing element (SOM) being configured to supply the filter module with a filter input voltage (Vef(t)) corresponding to the sum of the input voltage (Ve(t)) and the feedback voltage (Vsr(t)).

10. Recharging device according to any one of the preceding claims, wherein the recharging device (DIS) comprises a conversion module (C) adapted to deliver a regulated electrical power, the conversion module comprising at least one switch (Sw1, Sw2) controllable in opening and closing for supplying the regulated electrical power, and wherein the input voltage (Ve(t)) disturbances result at least in part from a saturation of said switch.

11. Recharging device according to claim 10, wherein the disturbances result from a saturation of said switch for a supply network (R) inductance value greater than a threshold value.

12. A method for recharging an electrical equipment, in particular an electric vehicle, implemented by means of a recharging device (DIS) connected to a power supply network (R) delivering to the recharging device at least an alternating input voltage (Ve(t)), the recharging device supplying the electrical equipment with at least one continuous output voltage (Vs(t)), the recharging device comprising:

- an input terminal (E) intended to be connected to the supply network (R);
- an output terminal (S) connected to the electrical equipment (EQ);
- a filter module (MF) comprising a filter input terminal (Ef) connected to the input terminal of the recharging device (DIS), and a filter output terminal (Sf), the filter module (MF) providing a filter output voltage (Vsf(t)) via the filter output terminal,

the method comprising a recharging step during which the electrical equipment (EQ) is recharged in electrical energy from the output voltage (Vs(t)) which is supplied by the recharging device, wherein during the recharging step, a feedback voltage (Vsr(t)) is generated from the filter output voltage (Vsf(t)) and the feedback voltage (Vsr(t)) is outputted via a feedback output terminal (Sr) connected to the filter input terminal (Ef) for the compensation of the input voltage disturbances resulting from a non-linear behavior of the recharging device, said feedback voltage (Vsr(t)) being in opposition with the input voltage (Ve(t)) of the recharging device, opposition meaning that, at an instant when the input voltage Ve(t) is at a local maximum, the feedback voltage is at a local minimum, and vice versa with a local minimum of the input voltage and a local maximum of the feedback voltage.

FIG. 1

FIG. 2

**FIG. 3**

**FIG. 4**

**FIG. 5**

**FIG. 6**

**FIG. 7**

**FIG. 8**

FIG. 9

**EP 3 391 521 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6127743 A